# DEMANDE DE BREVET EUROPEEN

(11) **EP 0 831 576 A1**
(43) Date de publication de la demande: **25.03.1998**
(21) Numéro de dépôt: 97402015.8
(22) Date de dépôt: 28.08.1997
(51) Int. Cl.: H02M 7/48, H02M 7/5387

(54) **Convertisseur de puissance à commutation douce comprenant des moyens de correction de la tension mediane d'un diviseur de tension capacitif**

(30) Priorité: 24.09.1996 FR 9611595
(71) Demandeur: ALCATEL ALSTHOM COMPAGNIE GENERALE D'ELECTRICITE, 75008 Paris (FR)
(72) Inventeur: Pouliquen, Hervé, 92140 Clamart (FR); Melhem, Wissam, c/o Lesir-Ens De Cachan, 94235 Cachan Cedex (FR); Elloumi, Khaled, c/o Lesir-Ens De Cachan, 94235 Cachan Cedex (FR); Cazabat, Stéphane, 91300 Massy (FR); Delay, Christian, 91420 Morangis (FR)
(74) Mandataire: Pothet, Jean Rémy Emile Ludovic

(57) **Abrégé**

Convertisseur de puissance comprenant deux commutateurs principaux (S1 et S2) connectant une sortie (S), soit au rail positif (VR+), soit au rail négatif (VR-), deux diodes de roue libre (D1 et D2) permettant le maintien du courant dans la charge (L), deux condensateurs de basculement (C1 et C2) et un circuit auxiliaire (CA) comprenant notamment une inductance auxiliaire (LA) en série avec deux commutateurs auxiliaires (T1 et T2), couplé entre la sortie (S) et un point milieu (M) d'un diviseur de tension capacitif (DC) fournissant une tension médiane.

Des moyens évaluent tout écart de ladite tension médiane par rapport à sa valeur nominale, tandis que les commutateurs principaux sont additionnellement commandés selon le sens dudit écart, pendant une durée dépendant de l'amplitude dudit écart, afin de causer un courant additionnel dans ledit circuit auxiliaire (CA) de nature à corriger en partie au moins ledit écart.

## Description

La présente invention concerne les convertisseurs de puissance dits à commutation douce, notamment les convertisseurs de puissance décrits dans l'article "High Power Transistor Inverters - Potential for Single Device Operation at 1000 A and 800 V", de G. A. Fisher, publié dans les minutes de la "16th Universities Power Engineering Conference", Sheffield, Grande-Bretagne, dans l'article "Resonant Snubbers with Auxiliary Switches", de W. McMurray, publié dans IEEE Transactions on Industry Applications, Vol.29, No.2, Mars/Avril 1993 et dans le document de brevet WO 92/05625.

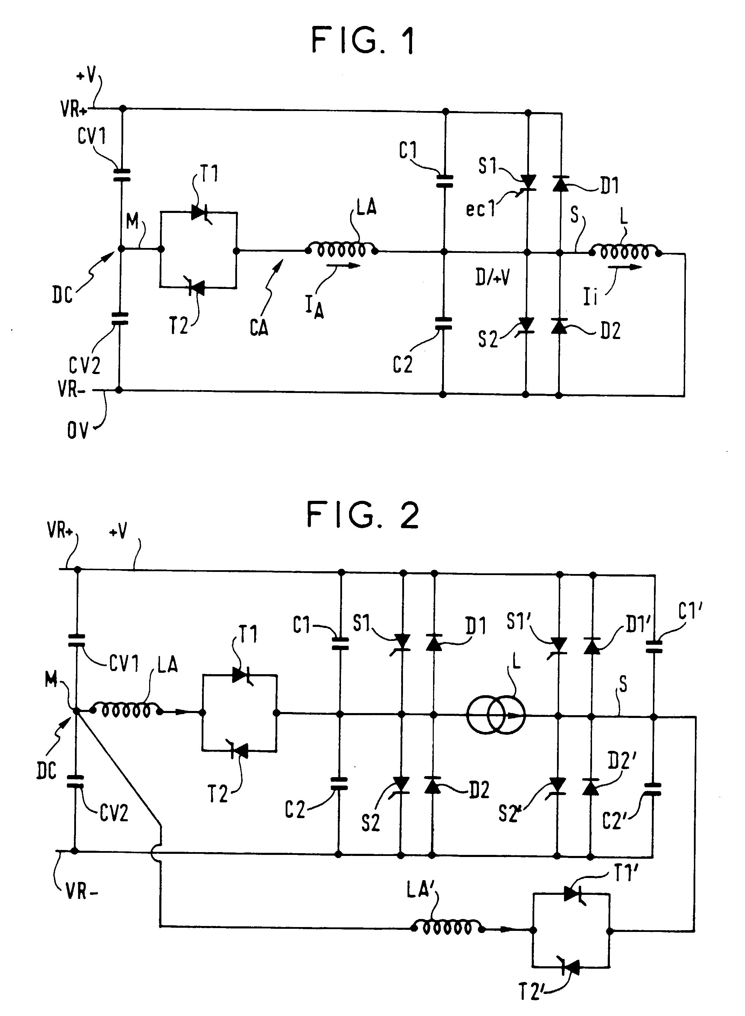

La figure 1 représente un bras de convertisseur du type décrit dans les publications mentionnées. Ce bras de convertisseur est destiné à l'alimentation d'une charge L, représentée comme essentiellement inductive, un moteur par exemple, à partir d'une source de tension continue fournie entre un rail positif VR+ et un rail négatif VR-. Il comprend essentiellement :
- deux commutateurs principaux, de type IGBT, par exemple, S1 et S2, permettant de connecter respectivement une sortie S menant à la charge L, soit au rail VR+, soit au rail VR- ;
- deux diodes de roue libre D1 et D2 permettant le maintien du courant dans la charge L en couplant respectivement la sortie S soit au rail positif VR+, soit au rail négatif VR-,
- deux condensateurs de basculement (snubbers, dans la terminologie anglo-saxonne) C1 et C2 entre la sortie S et, respectivement, le rail positif VR+ et le rail négatif VR-,
- un circuit auxiliaire CA comprenant notamment une inductance auxiliaire LA en série avec deux commutateurs auxiliaires à conduction unidirectionnelle opposés T1 et T2, des thyristors par exemple, ou des circuits fonctionnellement équivalents, couplé entre la sortie S et le point milieu M d'un diviseur de tension capacitif DC ; ce dernier comprend lui-même deux condensateurs diviseurs CV1 et CV2 connectés en série entre les rails positif VR+ et négatif VR- et fournissant en ce point milieu M, nominalement, une tension médiane par rapport à celles des rails positif VR+ et négatif VR-.

Dans ce circuit, les composants S1, D1, C1, T1, CV1 sont respectivement appairés avec les composants S2, D2, C2, T2, CV2, c'est-à-dire font respectivement montre en toutes occasions des mêmes caractéristiques électriques. Un circuit de commande non représenté mesure tensions et courants en divers points du convertisseur comprenant ce bras et, selon un programme approprié, commande le déclenchement des commutateurs principaux S1 et S2 et des commutateurs auxiliaires T1 et T2, par action sur des électrodes de commande qui sont seulement esquissées sur la figure, en ec1 par exemple, de la manière qui sera maintenant décrite. Pour illustrer le fonctionnement de ce circuit, dans le cas d'un convertisseur continu-continu, le bras de la figure 1 fonctionnant en hacheur, on partira d'un état dans lequel aucun commutateur n'est conducteur et un courant IL se maintient dans la charge L par la diode de roue libre D2 qui est alors conductrice. De ce fait, à la tension de seuil de la diode D2 près, la sortie S est au potentiel du rail VR-, 0 volt par exemple. Les condensateurs CV1 et CV2, de même capacité, sont chargés sous la tension existant entre les rails VR+ et VR-, que l'on appelera +V, de sorte que le point milieu M est à la tension médiane +V/2.

Le basculement du circuit commence par une première étape dans laquelle le commutateur auxiliaire T1 est déclenché par le circuit de commande. Il devient conducteur et l'inductance auxiliaire LA se retrouve alimentée entre +V/2 (au seuil de T1 près) et O V (au seuil de D2 près) ; le courant I_{A} qui la traverse croit linéairement. Ce courant se soustrait du courant IL dans la diode D2.

Lorsque I_{A} = I_{L} la diode D2 se bloque. La sortie S n'est plus couplée au rail VR-. L'inductance auxiliaire LA se retrouve alors en série avec les condensateurs C1 et C2, eux-mêmes en parallèle l'un sur l'autre à son égard. Une oscillation de courant s'amorce entre l'inductance et les condensateurs. Dans la première alternance de cette oscillation, le point milieu des condensateurs de basculement C1 et C2, c'est-à-dire la sortie S, passe de O à +V volts.

Le commutateur S1 est alors déclenché, sans tension à ses bornes et prend en charge le courant I_{L}. L'inductance LA, maintenant connectée entre le point M, au potentiel +V/2, et la sortie S, maintenue au potentiel +V à travers le commutateur T1, voit le courant I_{A} qui la traverse diminuer linéairement. Lorsqu'il s'annule, le commutateur auxiliaire T1 se bloque. On emploie pour cette raison un commutateur de type thyristor, qui possède la propriété de se bloquer lorsque le courant qui le traverse s'annule, ou toute combinaison de composants équivalente, un transistor ou un IGBT en série avec une diode, par exemple.

Le basculement dans l'autre sens, pour revenir à la situation initiale s'accomplit de façon similaire, en ayant recours au circuit auxiliaire CA dont le commutateur auxiliaire T2 est déclenché, comme plus haut le commutateur auxiliaire T1. De plus, le commutateur S1 est alors commandé pour se bloquer également. La tension de la sortie S passe alors de +V à 0 volts dans une oscillation à l'issue de laquelle le commutateur auxiliaire T2 se bloque, la diode D2 devenant alors conductrice sous l'effet du courant I_{L}.

D'autres modes d'utilisation du bras de convertisseur décrit peuvent être envisagées, notamment celui de la figure 2 où la charge est connectée entre deux bras de convertisseur identiques à celui de la figure 1, les éléments du deuxième bras portant pour cela les mêmes références que celle du premier, affectée d'un "'". Additionnellement et en variante, les inductances LA et LA' sont connectées entre les commutateurs auxiliaires et le point M, au lieu d'être connectées entre ces commutateurs auxiliaires et le point S ; cela ne change rien du point de vue du fonctionnement ici décrit. D'autres modes de fonctionnement peuvent être appliqués dans un convertisseur à deux bras tel que celui de la figure 2, notamment un fonctionnement en onduleur. Le fonctionnement de chacun des deux bras est calqué sur ce que l'on vient de décrire. Dans le fonctionnement en hacheur, le fonctionnement du bras de gauche implique alternativement la diode D2 et le commutateur T1, tandis que, en synchronisme, le fonctionnement du bras de droite implique la diode D1' et le commutateur T2'. Dans le fonctionnement en onduleur, après une alternance positive, ou plusieurs parties d'une alternance positive, conformes à ce que l'on vient d'exprimer, une alternance négative impliquera, d'un côté, la diode D1, puis le commutateur T2 et, de l'autre côté, la diode D2', puis le commutateur T1.

Dans ces différents cas, le basculement de tension de la sortie S d'un bras de convertisseur a lieu sans pertes si la tension sur cette sortie S passe effectivement de 0 à +V volts, c'est-à-dire si la tension aux bornes du circuit auxiliaire CA s'inverse, c'est-à-dire encore si la tension au point M est bien égale à +V/2. Pour cela, les capacités des condensateurs CV1 et CV2 du diviseur de tension DC doivent être suffisamment grandes et la symétrie des composants impliqués dans les phases de conduction du circuit auxiliaire doit être quasi-parfaite. L'expérience montre que ces conditions sont difficiles à remplir et cela constitue un problème.

Dans le cas du convertisseur symétrique de la figure 2, on remarquera que les deux bras partagent le même diviseur de tension DC. Les courants demandés à ce diviseur de tension sont en opposition et en principe égaux. Mais, en pratique, le problème évoqué plus haut se pose quand même.

L'homme de métier envisagera facilement une application du convertisseur que l'on vient de décrire dans le cadre d'un montage triphasé. Le même problème est toujours présent.

L'invention apporte à ce problème une solution efficace et peu coûteuse.

Selon l'invention, ledit convertisseur de puissance comprend en outre, des moyens pour évaluer un écart de ladite tension médiane par rapport à sa valeur nominale, ainsi que des moyens pour commander additionnellement l'un ou l'autre desdits commutateurs principaux, selon le sens dudit écart, pendant une durée dépendant de l'amplitude dudit écart, afin de causer un courant additionnel dans ledit circuit auxiliaire de nature à corriger en partie au moins ledit écart .

De préférence, ladite évaluation comprend une comparaison instantanée de ladite tension médiane et de ladite valeur nominale, fournissant un signal d'écart instantané, auquel est appliqué un opérateur proportionnel/intégral fournissant un signal de correction. Ladite évaluation comprend également la détermination du module et du signe dudit signal de correction.

Dans le cas d'un convertisseur à au moins deux bras, lesdits moyens pour commander comprennent des moyens pour évaluer le sens du courant dans ladite charge.

De préférence encore, lesdits moyens pour commander comprennent une logique combinatoire sélectionnant, selon le sens dudit écart, le commutateur principal devant faire l'objet d'une commande additionnelle.

Dans le cas d'un convertisseur à au moins deux bras, lesdits moyens pour commander comprennent une logique combinatoire sélectionnant, selon le sens dudit écart et le sens dudit courant dans la charge, le commutateur principal devant faire l'objet d'une commande additionnelle.

Ladite commande additionnelle rend ou maintient conducteur ledit commutateur sélectionné, pendant une durée dépendant dudit module dudit signal de correction.

Les différents objets et caractéristiques de l'invention seront maintenant exposés de façon plus détaillée dans la description qui va suivre d'un exemple de mise en oeuvre de l'invention, fourni à titre d'exemple non limitatif, description faite en se référant aux figures annexées qui représentent :
- la figure 1, déjà décrite, le schéma de principe d'un bras de convertisseur de puissance de type connu, auquel s'applique la présente invention,
- la figure 2, déjà décrite également, le schéma de principe d'un convertisseur de puissance de type connu, auquel s'applique la présente invention,
- la figure 3, les moyens prévus, selon l'invention, pour la commande d'un bras de convertisseur conforme à celui de la figure 1.

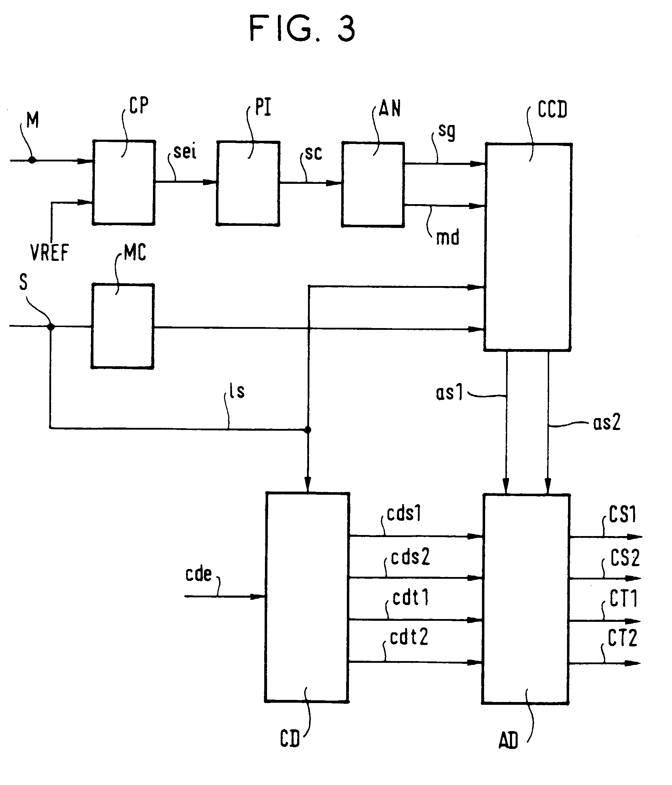

L'exemple de mise en oeuvre de l'invention représenté à la figure 3 est destiné à commander le fonctionnement du bras de convertisseur de la figure 1, ou celui de l'un des bras de convertisseur de la figure 2. C'est ainsi que le dispositif de la figure 3 est coupé au point M de la figure 1, pour l'évaluation de la tension médiane en ce point, au point S, pour l'évaluation de la tension en ce point et du courant dans la charge L, ainsi qu'aux électrodes de commande des commutateurs principaux S1 et S2, par des sorties CS1 et CS2, et aux électrodes de commande des commutateurs auxiliaires T1 et T2, par des sorties CT1 et CT2.

On ne précisera pas davantage les modes de couplage que l'on vient de citer. Cet aspect appartient au domaine bien connu de l'homme de métier.

Dans un premier cas d'application, on considérera l'application à un convertisseur comprenant seulement le bras de convertisseur de la figure 1 dont le fonctionnement a été exposé au début de ce texte.

Le dispositif de la figure 3 comprend ainsi, d'une manière générale, une entrée de commande cde appliquée à un dispositif de commande CD lequel, incluant à cet effet une base de temps non représentée, fournit des signaux sur ses sorties cdsl, cds2 dont la durée et/ou la position dans le temps dépend du signal de commande cde. Ces signaux sont destinés aux électrodes de commande des commutateurs principaux S1 et S2 qu'ils atteignent respectivement par l'intermédiaire d'un dispositif d'addition AD qui les retransmet normalement, on verra plus loin comment, sur ses sorties CS1 et CS2. En réponse au signal de commande cde, le dispositif de commande CD fournit aussi des signaux sur ses sorties cdtl et cdt2. Ces signaux sont destinés aux électrodes de commande des commutateurs auxiliaires T1 et T2 qu'ils atteignent respectivement par l'intermédiaire du dispositif d'addition AD qui les retransmet normalement, on verra également plus loin comment, sur ses sorties CT1 et CT2.

Selon l'exemple de fonctionnement fourni précédemment, le dispositif de commande CD fournit ainsi d'abord le signal cdtl, pour déclencher la conduction du commutateur auxiliaire T1, au début d'une opération de basculement. Ce signal cdtl peut être une impulsion brève, si le commutateur auxiliaire T1 est un thyristor, par exemple ; alternativement, il peut être maintenu jusqu'à ce que soit venu le temps de bloquer le commutateur auxiliaire T1. Ensuite, le dispositif de commande CD produit le signal cs1 pour déclencher la conduction du commutateur principal S1, à partir de l'instant approprié, c'est-à-dire de la fin d'une alternance d'oscillation du circuit comprenant l'inductance auxiliaire LA et les condensateurs de basculement C1 et C2, lorsque la tension au point S devient égale à +VR, ce dont il est informé par une liaison ls qui le connecte au point S. Le commutateur principal S1 étant par exemple un IGBT, le signal cs1 est maintenu par le dispositif de commande CD tant que le commutateur doit rester conducteur, en fonction du signal de commande cde, d'une manière générale.

Le basculement dans l'autre sens, tel qu'il a été décrit dans le préambule, est commandé par le dispositif de commande qui produit le signal cs2 et qui interrompt ensuite le signal cdt1, au moment approprié, en accord avec le fonctionnement que l'on a décrit.

Le dispositif de la figure 3 comporte un dispositif MC pour évaluer le sens du courant dans la charge L. Ce dispositif MC a une entrée reliée au point S, et une sortie reliée à une entrée du circuit de commande CCD.

Le dispositif de la figure 3 comprend par ailleurs des moyens CP, PI, AN, pour évaluer un écart éventuel de ladite tension médiane V/2 par rapport à sa valeur nominale, ainsi que des moyens CCD, AD pour commander additionnellement l'un ou l'autre des commutateurs principaux S1 et S2, selon le sens dudit écart, pendant une durée dépendant de l'amplitude dudit écart, afin de causer un courant additionnel dans ledit circuit auxiliaire de nature à corriger en partie au moins ledit écart.

Plus précisément, ladite évaluation comprend une comparaison dans un comparateur CP recevant, d'une part, la valeur instantanée de ladite tension médiane prélevée au point M et, d'autre part, une valeur de tension nominale VREF, fournie par une source de tension appropriée non représentée. Ce comparateur CP fournit un signal d'écart instantané sei dont l'amplitude est égale à la différence algébrique de ces deux tensions, lequel est appliqué à un opérateur proportionnel/intégral PI fournissant en échange un signal de correction sc. Ladite évaluation comprend également, dans un équipement AN qui peut prendre la forme de la combinaison d'un redresseur et d'un comparateur à 0, la détermination du module md et du signe sg du signal de correction sc. Le signal représentatif du module, md, et celui qui représente le signe, sg, sont fournis à un circuit de commande CCD. Ce circuit de commande CCD produit une impulsion sur une sortie asl ou une autre sortie as2, selon le signe de l'écart constaté, et dont, éventuellement, la durée dépend du module de cet écart.

Lorsque la tension au point M est trop élevée, l'impulsion en question est fournie sur la sortie as2 et le dispositif d'addition la retransmet sur sa sortie CS2. Cela se produit lorsque le courant s'annule dans la diode D2, ce qui se traduit par un variation de potentiel au point S, que le circuit de commande CCD reçoit également par la liaison ls.

Le signal ainsi transmis au commutateur principal S2 a pour effet de maintenir le point S au potentiel VR- et donc de prolonger le courant dans l'inductance LA, ce qui accroît la charge du condensateur diviseur CV1 et diminue celle du condensateur diviseur CV2, réduisant de ce fait la tension au point M. L'écart constaté initialement tend ainsi à se résorber. Il peut même être pratiquement annulé si l'on calibre exactement la durée du signal as2 en fonction du module md. Mais on peut procéder plus simplement à une correction incrémentale.

La correction d'un écart observé dans l'autre sens (le signal sg étant opposé) donne lieu à un signal csl qui prolonge la durée de conduction du commutateur principal S1, au lieu qu'il soit bloqué dès le déclenchement du commutateur auxiliaire T2. L'effet est le même, mais de sens opposé.

On voit donc qu'il est ainsi aisé de corriger tout écart de la tension médiane fournie par le diviseur de tension capacitif DC, à partir du fonctionnement d'un unique bras de convertisseur, tel que celui de la figure 1. Cela reste vrai bien sûr dans le cas d'un convertisseur à deux ou plusieurs bras, tel que celui de la figure 2. Toutefois, on observera aussi que dans le cas du convertisseur de la figure 2, puisque les deux bras conduisent en sens opposés, on peut se servir d'un bras pour une correction dans un sens, et de l'autre bras pour une correction dans l'autre sens. Il suffira ainsi, par exemple de prévoir une phase de conduction additionnelle du commutateur principal S2, telle que celle qui a été décrite précédemment, ou, pour une correction dans l'autre sens, une phase additionnelle semblable de conduction du commutateur principal S2'.

Bien entendu, le découpage en blocs illustré par la figure 3 et décrit dans ce qui précède n'a aucun caractère obligatoire et n'est fourni qu'à titre illustratif d'autres agencements des fonctions décrites sont possibles, les fonctions logiques des dispositifs CCD, CD, AD pouvant être accomplies par un ou plusieurs processeurs, éventuellement à logique programmée, selon la technologie disponible.

## Revendications

1. Convertisseur de puissance comprenant au moins un bras incluant, entre un rail positif (VR+) et un rail négatif (VR-)
- deux commutateurs principaux (S1 et S2) permettant de connecter respectivement une sortie (S) menant à une charge (L), soit au rail positif (VR+), soit au rail négatif (VR-) ;
- deux diodes de roue libre (D1 et D2) permettant le maintien du courant dans la charge (L) en couplant respectivement la sortie (S) au rail positif (VR+) ou au rail négatif (VR-),
- deux condensateurs de basculement (C1 et C2) entre la sortie (S) et, respectivement, le rail positif (VR+) et le rail négatif (VR-),
- un circuit auxiliaire (CA) comprenant notamment une inductance auxiliaire (LA) en série avec deux commutateurs auxiliaires à conduction unidirectionnelle opposés (T1 et T2), couplé entre la sortie (S) et un point milieu (M) d'un diviseur de tension capacitif (DC) comprenant lui-même deux condensateurs diviseurs (CV1 et CV2) connectés en série entre les rails positif (VR+) et négatif (VR-) et fournissant en ce point milieu, nominalement, une tension médiane par rapport à celles des rails positif (VR+) et négatif (VR-),
caractérisé en ce qu'il comprend en outre, des moyens (CP, PI, AN) pour évaluer un écart de ladite tension médiane par rapport à sa valeur nominale, ainsi que des moyens (CCD, AD) pour commander additionnellement l'un ou l'autre desdits commutateurs principaux (S1, S2), selon le sens dudit écart, pendant une durée dépendant de l'amplitude dudit écart, afin de causer un courant additionnel dans ledit circuit auxiliaire (CA) de nature à corriger en partie au moins ledit écart .

2. Convertisseur conforme à la revendication 1, caractérisé en ce que ladite évaluation comprend une comparaison instantanée (CP) de ladite tension médiane et de ladite valeur nominale (VREF), fournissant un signal d'écart instantané (se), auquel est appliqué un opérateur proportionnel/intégral (PI) fournissant un signal de correction (sc).

3. Convertisseur conforme à la revendication 2, caractérisé en ce que ladite évaluation comprend également la détermination du module (md) et du signe (sg) dudit signal de correction (sc).

4. Convertisseur conforme à la revendication 3, caractérisé en ce que, dans le cas d'un convertisseur à au moins deux bras, lesdits moyens pour commander (CCD, AD) comprennent des moyens (MC) pour évaluer le sens du courant dans ladite charge (L).

5. Convertisseur conforme à la revendication 3, caractérisé en ce que lesdits moyens pour commander (CCD, AD) comprennent une logique combinatoire sélectionnant, selon le sens dudit écart, le commutateur principal (S1, S2) devant faire l'objet d'une commande additionnelle.

6. Convertisseur conforme à la revendication 4, caractérisé en ce que lesdits moyens pour commander comprennent une logique combinatoire sélectionnant, selon le sens dudit écart et le sens dudit courant dans la charge, le commutateur principal (S1, S2) devant faire l'objet d'une commande additionnelle.

7. Convertisseur conforme à la revendication 5 ou 6, caractérisé en ce que ladite commande additionnelle rend ou maintient conducteur ledit commutateur principal sélectionné, pendant une durée dépendant dudit module dudit signal de correction.
